# EUROPEAN PATENT SPECIFICATION

(11) **EP 2 790 112 B1**
(45) Date of publication and mention of the grant of the patent: **20.02.2019**
(21) Application number: 13758552.7
(22) Date of filing: 01.03.2013
(51) Int. Cl.: G06F 17/30

(54) **METHOD AND SYSTEM FOR DATA SYNCHRONIZATION AND DATA ACCESS APPARATUS**
VERFAHREN UND SYSTEM ZUR DATENSYNCHRONISATION UND DATENZUGRIFFSVORRICHTUNG
PROCÉDÉ ET SYSTÈME POUR LA SYNCHRONISATION DES DONNÉES ET APPAREIL D'ACCÈS AUX DONNÉES

(30) Priority: 09.03.2012 CN 201210060602
(43) Date of publication of application: 15.10.2014
(73) Proprietor: Huawei Technologies Co., Ltd., Longgang District Shenzhen, Guangdong 518129 (CN)
(72) Inventor: DING, Fuhai, Shenzhen Guangdong 518129 (CN)
(74) Representative: Goddar, Heinz J.
(86) International application number: PCT/CN2013/072076
(87) International publication number: WO 2013/131448

(56) References cited:
- EP-A2- 1 349 085
- CN-A- 101 142 573
- CN-A- 101 308 513
- CN-A- 101 719 149
- CN-A- 102 629 268
- US-A1- 2005 010 572
- US-B1- 7 290 015

## Description

### TECHNICAL FIELD

The present invention relates to database synchronization technologies, and in particular, to a method and a system for data synchronization and a data access apparatus.

### BACKGROUND

At present, data synchronization technologies are used more and more widely, typically, such as a database disaster recovery solution and a database data migration solution. The following describes an application status of the current data synchronization technologies by using the database disaster recovery solution. At present, a disaster recovery solution where two sites are working at the same time exists, which is called an Active-Active mode. That is, the two sites back up database data for each other, and a third-party service is used to double-write the databases, so as to ensure real-time data synchronization between the two sites. A modification request sent by a third-party device through a core network or by using a load distributor to the database of either site can be processed properly.

In the Active-Active mode, when a disaster occurs on one site, the modification request sent by the third-party device can be triggered only on a normal site. When a hardware or software fault of the faulty site is rectified, database data of the faulty site is different from database data of the normal site or the database data of the faulty site is permanently damaged.

Therefore, in order to restore the database data of the faulty site, so that the database data of the faulty site is the same as the database data of the normal site and the two sites can operate at the same time again, the database data needs to be synchronized between the two sites.

In a process of synchronizing the database data between the two sites, the data in the database of the normal site is synchronized to the database of the faulty site by using a database-level synchronization link, which is established with the database of the faulty site, in the database of the normal site. In the process of synchronizing the database data between the two sites, the normal site processes the modification request sent by the third-party device without being affected, but the database of the faulty site is in a ReadOnly (ReadOnly) state or a Mounted (Mounted) state. When the faulty site recovers and works properly, the database of the faulty site needs to be activated to be a ReadWrite (ReadWrite) state before it can receive the modification request sent by the third-party device. At the same time when the database of the faulty site is activated, the database-level synchronization link is disconnected automatically. In this case, a data synchronization relationship between the databases of the two sites no longer exists. Subsequently, the databases of the two sites may implement real-time data synchronization by using a double-write mechanism of the third-party device on the two databases. Before the database of the faulty site is activated, the database of the normal site needs to stop receiving the modification request sent by the third-party device until the databases of the two sites can process the modification request sent by the third-party device at the same time. Then, the database of the normal site continues to receive modification requests from the third-party device. Therefore, in the process of data synchronization, the database must stop receiving the modification request sent by the third-party device.

Based on the process of synchronizing database data between two sites, data synchronization interrupts service access to the database. Interruption duration is still recorded in downtime. This is intolerable for an operator or a database vendor on which a strict requirement is imposed.

EP 1349085 A2 discloses that database replication systems replicate blocks of transaction steps or operations with synchronous replication, and perform dual writes with queuing and blocking of transactions. Tokens are used to prepare a target database for replication from a source database and to confirm the preparation. Database replication systems switch between a synchronous replication mode and an asynchronous replication mode, and then back to a synchronous replication mode, based on detection of selected events.

US 7,290,015 B1 discloses an application-level replication, the synchronization of data updates within a cluster of application servers, by having application servers themselves synchronize all updates to multiple redundant databases, precluding the need for database-level replication. This may be accomplished by first sending a set of database modifications requested by the transaction to a first database. Then a message may be placed in one or more message queues, the message indicating the objects inserted, updated, or deleted in the transaction. Then a commit command may be sent to the first database. The set of database modifications and a commit command may then be sent to a second database. This allows for transparent synchronization of the databases and quick recovery from a database failure, while imposing little performance or network overhead.

### SUMMARY

Embodiments of the present invention provide a method and a system for data synchronization and a data access apparatus, thereby implementing uninterrupted receiving of a modification request from a third-party device and data modification processing in a process of database data synchronization.

An embodiment of the present invention provides a method for data synchronization, including: in a process of database-level synchronization between through a database-level synchronization link a first database and a second database, sending, by a data access apparatus, a request for creating a transaction to a first database, where the request includes an operation command required for executing the transaction; establishing an application-level synchronization link between the data access apparatus, the temporary storage queue, the first database, and the second database; when the first database executes the transaction according to the operation command, through the application-level synchronization link, acquiring, by the data access apparatus, a sequence number from the first database and sending the operation command required for executing the transaction and the sequence number corresponding to the transaction to a temporary storage queue for storage, where the sequence number is assigned by the first database to the transaction and the sequence of sequence numbers is the same as a sequence for creating the transactions corresponding to the sequence numbers; acquiring, by the data access apparatus, a switching sequence number from the second database when detecting that the second database is writable after a database-level synchronization link between the first database and the second database is disconnected, where the switching sequence number is a sequence number corresponding to a last transaction synchronized from the first database; determining, by the data access apparatus, a sequence number that is stored in the temporary storage queue and follows the switching sequence number, and sending an operation command required for executing a transaction corresponding to the determined sequence number to a second database, so as to implement application-level data synchronization.

Optionally, the method further includes the following: The implementing application-level data synchronization specifically includes: receiving, by the second database, the operation command required for executing the transaction corresponding to the sequence number following the switching sequence number and executing, according to a sequence of the sequence number, the operation command required for executing the transaction corresponding to the sequence number following the switching sequence number.

Optionally, the method further includes the following: The sending, by a data access apparatus, a request for creating a transaction to a first database, where the request includes an operation command required for executing the transaction includes: receiving, by the data access apparatus, a modification request sent by a third-party device, where the modification request includes the operation command required for executing the transaction; and sending, by the data access apparatus, a request for creating a transaction to the first database, where the request includes the operation command required for executing the transaction.

Optionally, the method further includes the following: The acquiring, by the data access apparatus, a sequence number from the first database when the first database executes the transaction specifically includes: sending, by the data access apparatus, a request for querying a sequence number to the first database when the first database executes the transaction; and receiving, by the data access apparatus, a sequence number corresponding to the transaction, where the sequence number is sent by the first database.

Optionally, the method further includes the following: The sending, by the data access apparatus, the operation command required for executing the transaction and the sequence number corresponding to the transaction to a temporary storage queue for storage specifically includes: receiving, by the data access apparatus, an operation result sent by the first database, where the operation result is an operation result obtained by the first database by executing the operation command; submitting a request of the transaction to the first database to end the transaction; and sending the operation command required for executing the transaction and the sequence number corresponding to the transaction to the temporary storage queue for storage.

Another embodiment of the present invention provides an data access apparatus, including: a first interacting module, configured to, in a process of database-level synchronization between a first database and a second database, send, to the first database, a request for creating a transaction, where the request includes an operation command required for executing the transaction; a storing module, configured to, through an application-level synchronization link, when the first database executes the transaction according to the operation command, acquire the sequence number from the first database and send the operation command required for executing the transaction and the sequence number corresponding to the transaction to a temporary storage queue for storage, where the sequence number is assigned by the first database to the transaction and the application-level synchronization link is established between the data access apparatus, the temporary storage queue, the first database, and the second database; an acquiring module, configured to acquire the switching sequence number from the second database when the database-level synchronization link between the first database and the second database is disconnected, where the switching sequence number is a sequence number corresponding to a last transaction synchronized from the first database; wherein the acquiring module specifically comprises: a detecting unit, configured to, when the database-level synchronization link between the first database and the second database is disconnected, detect whether the first database is writable; and an acquiring unit, configured to acquire the switching sequence number from the second database when the detecting unit detects that the first database is writable; and a second interacting module, configured to determine the sequence number that is stored in the temporary storage queue and follows the switching sequence number, and send the operation command required for executing the transaction corresponding to the determined sequence number to the second database, so as to implement application-level data synchronization.

Optionally, the data access apparatus further includes the first interacting module that specifically includes: a receiving unit, configured to receive a modification request sent by a third-party device, where the modification request includes the operation command required for executing the transaction; and a sending unit, configured to send, to the first database, a request for creating a transaction, where the request includes the operation command required for executing the transaction.

Optionally, the data access apparatus further includes the storing module that specifically includes: a querying unit, configured to send a request for querying a sequence number to the first database when the first database executes a transaction and receive a sequence number corresponding to the transaction from the first database; a submitting unit, configured to receive the operation result obtained after the first database executes the operation command from the first database and submit a request of the transaction to the first database to end the transaction; and a storing unit, configured to send the operation command required for executing the transaction and the sequence number corresponding to the transaction to a temporary storage queue for storage.

Another embodiment of the present invention provides a system for data synchronization, including: a first database, configured to, in a process of database-level synchronization between the first database and the second database, receive a request for creating a transaction from a data access apparatus, where the request includes the operation command required for executing a transaction, execute the transaction, and assign a sequence number to the transaction; a data access apparatus, configured to, in a process of database-level synchronization between the first database and the second database, send a request for creating a transaction, through an application-level synchronization link,_acquire the sequence number from the first database when the first database executes the transaction according to the operation command, and send the operation command required for executing the transaction and the sequence number corresponding to the transaction to a temporary storage queue for storage; wherein the sequence number is assigned by the first database to the transaction and the application-level synchronization link is established between the data access apparatus, the temporary storage queue, the first database, and the second database; when detecting that the first database is writable after the database-level synchronization link between the first database and the second database is disconnected, acquiring the switching sequence number from the second database, which is a sequence number corresponding to the last transaction synchronized from the first database; determining the sequence number that is stored in the temporary storage queue and follows the switching sequence number, and sending the operation command required for executing the transaction corresponding to the determined sequence number to the second database, so as to implement application-level database synchronization; and the second database, configured to, receive the operation command required for executing the transaction corresponding to the determined sequence number from the data access apparatus, so as to implement application-level data synchronization after a database-level synchronization link is established with the first database, a database-level data synchronization operation is performed with the first database and the database-level synchronization link with the first database is disconnected.

Optionally, the system further includes a temporary storage queue, configured to store the operation command required for executing the transaction and the sequence number corresponding to the transaction, where the operation command the sequence number are sent by the data access apparatus.

It can be seen from the foregoing technical solutions provided in embodiments of the present invention that: In a process of database-level synchronization between the first database and the second database according to embodiments of the present invention, the data access apparatus sends a request for creating a transaction to the first database, where the request includes the operation command required for executing a transaction; when the first database executes the transaction, the data access apparatus acquires the sequence number from the first database and sends the operation command required for executing the transaction and the sequence number corresponding to the transaction to a temporary storage queue for storage; when the database-level synchronization link between the first database and the second database is disconnected, the data access apparatus acquires the switching sequence number from the second database and sends the operation command required for executing the transaction corresponding to the sequence number that is stored in the temporary storage queue and follows the switching sequence number, and to the second database, so as to implement application-level data synchronization. In this way, when the two databases are performing data synchronization, the databases can still receive an access request from a third-party device while the processing performed by the third-party devices is not interrupted, which improves the actual application performance of data synchronization.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for data synchronization according to an embodiment of the present invention;
FIG. 2 is a flowchart of a method for data synchronization according to another embodiment of the present invention;
FIG. 3 is a schematic structural diagram of a data disaster recovery system according to an embodiment of the present invention;
FIG. 4 is a flowchart of a method for data synchronization according to another embodiment of the present invention;
FIG. 5 is a schematic structural diagram of a data migration system according to an embodiment of the present invention;
FIG. 6 is a schematic structural diagram of a data access apparatus according to an embodiment of the present invention;
FIG. 7 is a schematic structural diagram of a data access apparatus according to another embodiment of the present invention; and
FIG. 8 is a schematic structural diagram of a system for data synchronization according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

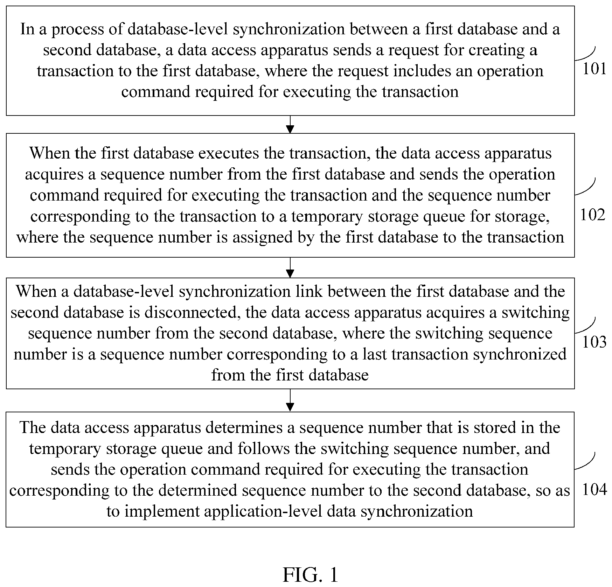

A method for data synchronization according to an embodiment of the present invention is described first. The method for data synchronization describes a handling procedure of a data access apparatus in a system for data synchronization. FIG. 1 shows a procedure of a method for data synchronization according to an embodiment of the present invention, which includes the following:
101. In a process of database-level synchronization between a first database and a second database, a data access apparatus sends a request for creating a transaction to the first database, where the request includes an operation command required for executing the transaction.
102. When the first database executes the transaction, the data access apparatus acquires a sequence number from the first database, and sends the operation command required for executing the transaction and the sequence number corresponding to the transaction to a temporary storage queue for storage, where the sequence number is assigned by the first database to the transaction.
103. When a database-level synchronization link between the first database and the second database is disconnected, the data access apparatus acquires a switching sequence number from the second database, where the switching sequence number is a sequence number corresponding to a last transaction synchronized from the first database.
104. The data access apparatus determines a sequence number that is stored in the temporary storage queue and follows the switching sequence number, and sends the operation command required for executing the transaction corresponding to the determined sequence number to the second database, so as to implement application-level data synchronization.

According to the solution in this embodiment of the present invention, when data synchronization is performed between two databases, a database can still receive access of a third-party device and processing performed by the third-party device on the database is not interrupted. This improves performance of data synchronization in actual application.

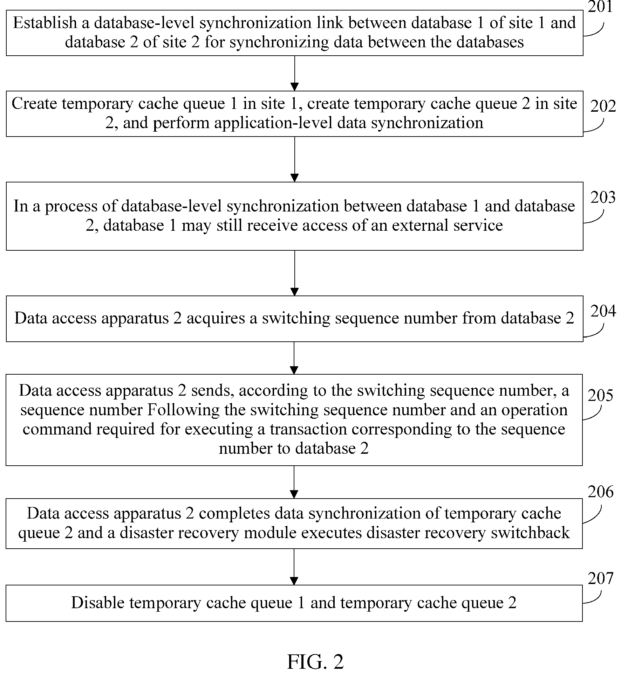

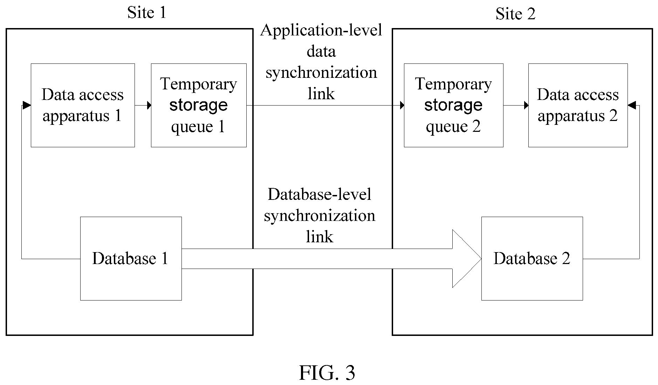

FIG. 2 shows a procedure of a method for data synchronization according to another embodiment of the present invention. FIG. 3 is a schematic structural diagram of a data disaster recovery system according to the embodiment of the present invention. Site 1 is a normal production site and site 2 is a faulty site. In this case, disaster recovery needs to be performed on data of database 2 of site 2. However, the database 2 of site 2 is in a ReadOnly state or a Mounted state, and database 1 of site 1 is in a ReadWrite state. This embodiment includes the following:
201. Establish a database-level synchronization link between database 1 of site 1 and database 2 of site 2 for data synchronization between the databases.

After the database-level synchronization link is established between the database 1 and the database 2, data in the database 1 can be fully synchronized to the database 2 before the database-level synchronization link is established. In the foregoing process of database-level data synchronization, the database 1 may still receive a modification request sent by a third-party device. When the third-party device modifies the data in the database 1, an operation command required by a complete transaction for the first database may be sent to the database 2 through the database-level synchronization link, and then the database 2 executes the operation command, so as to implement data modification that is the same as that on the first database. The database-level synchronization link may specifically be a Dataguard link or another synchronization link. In this embodiment of the present invention, the modification includes many types, such as insertion, deletion, and update.

Both the database 1 and the database 2 store a data record table, where the data record table may include only a sequence number or may also include a sequence number and an operation command required by a transaction corresponding to the sequence number. The sequence number is a number of a sequence, and it can be used to indicate a database transaction. The sequence number is uniquely corresponding to an operation command required by one database transaction. Because database transactions are executed in a chronological order, the sequence of sequence numbers is the same as a sequence for creating the transactions corresponding to the sequence numbers. The sequence number is a global label defined by the database and can be a natural number. It is marked one by one according to the chronological order for executing database transactions, for example, a sequence number of the first transaction is 10001, a sequence number of the second transaction is 10002, and a sequence number of the third transaction is 10003. The sequence number can also be a global sequence number in a database. Any operation on the database is identified by one global sequence number. Because global sequence numbers have the automatic accumulation function, before an operation is performed, a current global sequence number is queried from a global sequence list. After data modification is executed, the current global sequence number plus one is used as a global sequence number of this operation. In this embodiment of the present invention, a global sequence number of an operation in a transaction may be used to indicate a sequence number corresponding to the transaction. Then, the sequence number is written into a data record table. Manners for generating a sequence number on the database 1 and the database 2 are the same, and sequence numbers corresponding to the same transaction in the database 1 and the database 2 are the same. Therefore, whether data synchronization is completed can be determined by comparing a data record table in the database 1 with that in the database 2.

In this embodiment of the present invention, a data record table includes sequence numbers and the operation commands required for executing transactions corresponding to the sequence numbers. A data record table is shown in Table 1.

**Table 1**

| **Sequence Number** | **Operation Command Required for a Transaction Corresponding to the Sequence Number** |
|---|---|
| 10001 | SQL 1, SQL 2 |
| 10002 | SQL 3, SQL 4 |
| 10003 | SQL 5 |
| ... | ... |

When a data-level synchronization link is performed between the database 1 and the database 2, the database 1 synchronizes, according to sequence numbers, operation commands required for executing transactions corresponding to the sequence numbers to the second database one by one. That is, the database 1 sends sequence numbers and the operation commands required for executing transactions corresponding to the sequence numbers to the database 2. The database 2 executes the foregoing operation commands one by one according to a sequence of the sequence numbers, so as to implement data synchronization.

202. Create temporary storage queue 1 in site 1, create temporary storage queue 2 in site 2, and perform application-level data synchronization.

An application-level synchronization link is established between data access apparatus 1, temporary storage queue 1 in site 1, and data access apparatus 2 temporary storage queue 2 in site 2,.

203. In the process of database-level synchronization between the database 1 and the database 2, the database 1 may still receive access of the third-party device, that is, the third-party device may continue modification processing on the database 1.

Specifically, data access apparatus 1 receives a modification request sent by the third-party device, where the modification request includes the operation command required for executing a transaction, where the operation command may be a Structured Query Language (Structured Query Language, SQL) statement or another operation command, for example, a JAVA operation command. Data access apparatus 1 sends a request for creating a transaction to the first database, where the request includes an operation command required for executing a transaction, that is, creates a transaction on the first database. Then, after receiving the request for creating a transaction, the database 1 assigns a sequence number to the transaction, executes the transaction according to the operation command, and generates an operation result. The database 1 writes the sequence number corresponding to the transaction and the operation command required for executing the transaction to the data record table, and sends the operation result to data access apparatus 1. After receiving the operation result, data access apparatus 1 submits a request of the transaction to end the transaction. In this way, data modification on the first database is completed. Before submitting the transaction to the database 1, data access apparatus 1 may further send a request for querying a sequence number to the database 1, and the database 1 acquires, according to the request, the sequence number corresponding to the transaction and sends the sequence number to data access apparatus 1. The following is an example of a process for processing a transaction:
begin transaction
execute SQL1
execute SQL2
execute SQL3
commit transaction

After submitting the transaction to the database 1, data access apparatus 1 sends the sequence number corresponding to the transaction and the operation command required for executing the transaction to temporary storage queue 1. Temporary storage queue 1 sends the sequence number corresponding to the transaction and the operation command required for executing the transaction to temporary storage queue 2 of site 2, where temporary storage queue 2 stores the sequence number corresponding to the transaction and the operation command required for executing the transaction.

The sending, by data access apparatus 1, the sequence number corresponding to the transaction and the operation command required for executing the transaction to temporary storage queue 2 for storage may specifically be as follows: A data access module combines the sequence number corresponding to the transaction and the operation command required for executing the transaction into a temporary synchronization message, and sends the temporary synchronization message to temporary storage queue 1; then temporary storage queue 1 sends the temporary synchronization message to temporary storage queue 2; and after receiving the temporary synchronization message, temporary storage queue 2 may store the sequence number corresponding to the transaction and the operation command required for executing the transaction into a temporary synchronization table. A temporary synchronization table is specifically shown in Table 2.

**Table 2**

| **Sequence Number** | **Operation Command Required for a Transaction Corresponding to the Sequence Number** |
|---|---|
| 10002 | SQL 3, SQL 4 |
| 10003 | SQL 5 |
| ... | ... |

204. Activate the database 2 to enter a ReadWrite state. In this case, the database 1 disconnects the database-level synchronization link with the database 2. That is, the database 1 interrupts the database-level data synchronization with the database 2. Data access apparatus 2 detects that the database 2 is already writable. Data access apparatus 2 acquires a switching sequence number from the database 2, where the switching sequence number is a sequence number corresponding to a last transaction synchronized from the database 1.

205. Data access apparatus 2 sends, according to the switching sequence number, the sequence number following the switching sequence number and the operation command required for execution the transaction corresponding to the sequence number to the database 2, so as to synchronize data.

Data access apparatus 2 searches temporary storage queue 2 for the foregoing switching sequence number and sends the operation command required for executing the transaction corresponding to the sequence number that is stored in temporary storage queue 2 and follows the switching sequence number and to the database 2. The database 2 executes, according to the sequence of the sequence number, the operation command required for executing the transaction corresponding to the sequence number following the switching sequence number one by one. Therefore, application-level data synchronization is completed. Subsequently, data access apparatus 2 checks temporary storage queue 2 and, if data access apparatus 2 receives a new temporary synchronization message, immediately sends the temporary synchronization message to the database 2. In this case, database synchronization seamlessly transforms from database-level synchronization to application-level synchronization.

206. Data access apparatus 2 completes data synchronization of temporary storage queue 2, and a disaster recovery module executes disaster recovery switchback.

After disaster recovery switchback is performed, data access apparatus 1 does not need to send the temporary synchronization message to temporary storage queue 1; data access apparatus 2 does not need to receive the temporary synchronization message from temporary storage queue 2; and a third-party device is informed that a write operation may be performed on the database 1 of site 1 and the database 2 of site 2 at the same time.

207. Disable temporary storage queue 1 and temporary storage queue 2.

In this example of the present invention, in a process of disaster recovery, because an application-level synchronization link is established between the database 1, data access apparatus 1, temporary storage queue 1, temporary storage queue 2, data access apparatus 2, database 2, the database 1 can still receive access of a third-party device in a process of database-level synchronization between the database 1 and the database 2; data access apparatus 2 can acquire a switching sequence number from the database 2 when a database-level synchronization link between the database 1 and the database 2 is disconnected; and then data access apparatus 2 sends an operation command required for executing a transaction corresponding to a sequence number that is stored in temporary storage queue 2 and follows the switching sequence number to the second database, so as to implement application-level data synchronization. Hence, in the process of database disaster recovery, a databases can still receive the access of the third-party device and modification processing performed by the third-party device on the database is not interrupted. This improves performance of database disaster recovery.

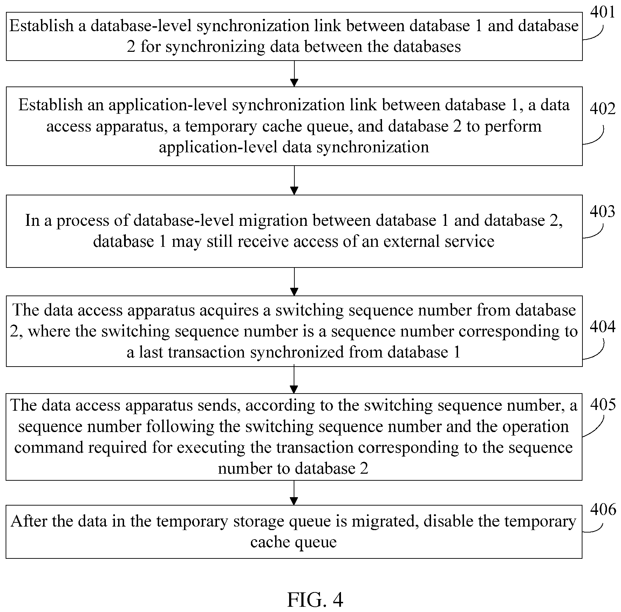

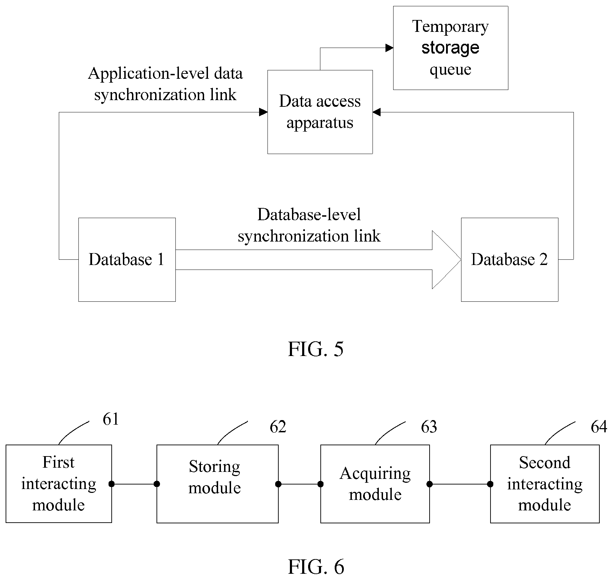

FIG. 4 shows a procedure of a method for migrating data according to another embodiment of the present invention. FIG. 5 is the schematic diagram of an application scenario of this embodiment. In this embodiment, database 1 is a source database for migration and database 2 is a destination database for migration. The database 1 is in a ReadWrite state and the database 2 is in a ReadOnly state or a Mounted (Mounted) state. This embodiment includes the following:
401. Establish a database-level synchronization link between database 1 and database 2 and migrate data in the database 1 to the database 2.

After the database-level synchronization link between the database 1 and the database 2 is established, data in the database 1 before a database-level synchronization link is established can be fully migrated to the database 2. In the process of the database-level data migration, the database 1 may still receive a modification request sent by a third-party device. When the third-party device modifies data in the database 1, the operation command required for executing a complete transaction on the database 1 can be sent to the database 2 through the database-level synchronization link, and then the database 2 executes the operation command to implement data modification that is the same as that on the database 1. The database-level synchronization link may specifically be a Dataguard link or another synchronization link. Both the database 1 and the database 2 store a data record table, where the data record table may include only a sequence number or may also include a sequence number and an operation command required by a transaction corresponding to the sequence number. The sequence number is a number of a sequence, and it can be used to indicate a database transaction. The sequence number is uniquely corresponding to an operation command required by one database transaction. Because database transactions are executed in a chronological order, the sequence of sequence numbers is the same as a sequence for creating the transactions corresponding to the sequence numbers. Manners for generating a sequence on the database 1 and the database 2 are the same, and sequence numbers corresponding to the same transaction in the database 1 and the database 2 are the same.

In this embodiment of the present invention, a data record table includes sequence numbers and the operation commands required for executing transactions corresponding to the sequence numbers. A data record table is shown in Table 3.

**Table 3**

| **Sequence Number** | **Operation Command Required for a Transaction Corresponding to the Sequence Number** |
|---|---|
| 10001 | SQL 1, SQL 2 |
| 10002 | SQL 3, SQL 4 |
| 10003 | SQL 5 |
| ... | ... |

When a database-level synchronization link is performed between the database 1 and the database 2, the database 1 synchronizes the operation commands required for executing transactions to which sequence numbers correspond to the database 2 according to sequence numbers one by one. That is, the database 1 sends sequence numbers and the operation commands required for executing transactions corresponding to the sequence numbers to the database 2. The database 2 executes the foregoing operation commands one by one according to a sequence of sequence numbers, so as to implement data synchronization.

402. When the data migration is nearly completed, create a temporary storage queue and establish an application-level synchronization link between the database 1, the database 2, a data access apparatus, and the temporary storage queue to perform application-level data synchronization.

403. In a process of database-level migration between the database 1 and the database 2, the database 1 may still receive access of the third-party device, that is, continue modification processing performed by the third-party device on the database 1.

Specifically, the data access apparatus receives a modification request sent by the third-party device, where the modification request includes the operation command required for executing a transaction, where the operation command may be a Structured Query Language (Structured Query Language, SQL) statement or another operation command, for example, a JAVA operation command. The data access apparatus sends a request for creating a transaction to the database 1, where the request includes the operation command required for executing a transaction. That is, a transaction is created on the database 1. After receiving the request for creating a transaction, the database 1 assigns a sequence number to the transaction, executes the transaction according to the operation command to perform a modification operation on database data, and generates an operation result. The database 1 writes the sequence number corresponding to the transaction and the operation command required for executing the transaction to the data record table, and sends the foregoing operation result to the data access apparatus. After receiving the operation result, the data access apparatus submits a request of the transaction to end the transaction. Therefore, data modification on the database 1 is completed. Before submitting the transaction to the database 1, the data access apparatus may also send a request for querying a sequence number to the database 1, and the database 1 acquires, according to the request, the sequence number corresponding to the transaction and sends the sequence number to the data access apparatus.

After submitting the transaction to the database 1, the data access apparatus sends the sequence number corresponding to the transaction and the operation command required for executing the transaction to the temporary storage queue, and the temporary storage queue stores the sequence number corresponding to the transaction and the operation command required for executing the transaction in the temporary storage queue.

The sending, by the data access apparatus, the sequence number corresponding to the transaction and the operation command required for executing the transaction to the temporary storage queue for storage may specifically be as follows: The data access apparatus combines the sequence number corresponding to the transaction and the operation command required for executing the transaction into a temporary synchronization message and sends the temporary synchronization message to the temporary storage queue; the temporary storage queue may store the sequence number corresponding to the transaction and the operation command required for executing the transaction to a temporary synchronization table. The temporary synchronization table is shown in Table 4.

Table 4 shows the temporary synchronization table.

**Table 4**

| **Sequence Number** | **Operation Command Required for a Transaction Corresponding to the Sequence Number** |
|---|---|
| 10002 | SQL 3, SQL 4... |
| 10003 | SQL5, ... |
| ... | ... |

404. Activate the database 2 to enter a ReadWrite state. In this case, the database 1 disconnects the database-level synchronization link with the database 2, that is, the database 1 interrupts the database-level migration with the database 2. The data access apparatus detects that the database 2 is already writable. The data access apparatus acquires the switching sequence number from the database 2, where the switching sequence number is a sequence number corresponding to the last transaction synchronized from the database 1.

405. The data access apparatus sends, according to the switching sequence number, the sequence number following the switching sequence number and the operation command required for executing the transaction corresponding to the sequence number to the database 2, so as to synchronize data.

The data access apparatus searches the temporary storage queue for the foregoing switching sequence number and sends the operation command required for executing the transaction corresponding to the sequence number that is stored in the temporary storage queue and follows the switching sequence number and the sequence number following the switching sequence number to the database 2. The database 2 executes, according to the sequence of the sequence number, the operation command required for executing the transaction corresponding to the sequence number following the switching sequence number. Therefore, application-level data synchronization is completed.

Subsequently, data access apparatus 2 checks the temporary storage queue and if a new temporary synchronization message is received, immediately sends the temporary synchronization message to the database 2. In this case, database synchronization seamlessly transforms from database-level synchronization to application-level synchronization.

406. After data in the temporary storage queue is migrated, disable the temporary storage queue.

In the embodiment of the present invention, in a process of database migration, because an application-level synchronization link is established between the database 1, the data access apparatuses, the temporary storage queue, and the database 2, in a process of database-level migration between the database 1 and the database 2, the database 1 can still receive access of a third-party device; the data access apparatus can acquire the switching sequence number from the database 2 when the database-level synchronization link between the database 1 and the database 2 is disconnected; and then the data access apparatus sends an operation command required for executing a transaction corresponding to a sequence number that is stored in a temporary storage queue to the database 2 and follows the switching sequence number, so as to implement application-level data synchronization. Therefore, in the process of database migration, the databases can still receive access of the third-party device and processing of modification performed by the third-party device is not interrupted. This improves performance of database disaster recovery migration.

FIG. 6 shows a schematic diagram of a data access apparatus according to an embodiment of the present invention, including:
a first interacting module 61, configured to, in a process of database-level synchronization between the first database and a second database, send a request for creating a transaction to the first database, where the request includes an operation command required for executing the transaction;
a storing module 62, configured to, when the first database executes the transaction, acquire a sequence number from the first database and send the operation command required for executing the transaction and the sequence number corresponding to the transaction to a temporary storage queue for storage, where the sequence number is assigned by the first database to the transaction;
an acquiring module 63, configured to acquire a switching sequence number from the second database when a database-level synchronization link between the first database and the second database is disconnected, where the switching sequence number is a sequence number corresponding to a last transaction synchronized from the first database; and
a second interacting module 64, configured to determine a sequence number that is stored in the temporary storage queue and follows the switching sequence number, and send the operation command required for executing the transaction corresponding to the determined sequence number to the second database, so as to implement application-level data synchronization.

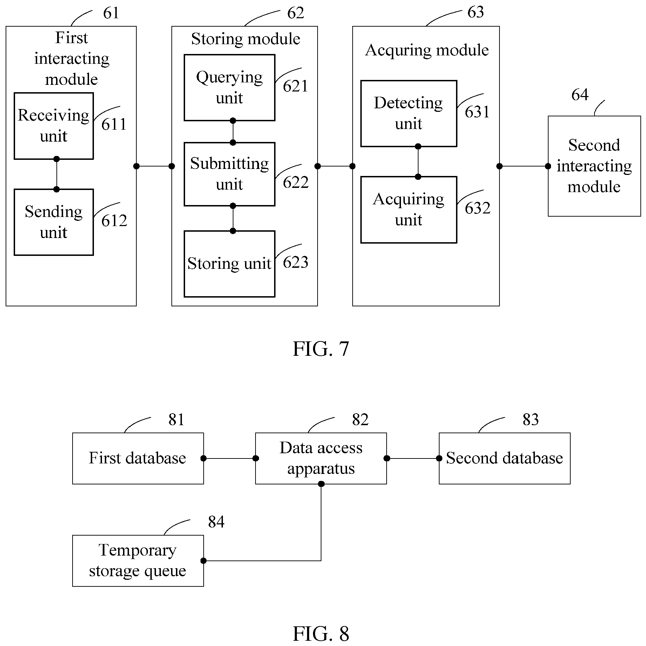

Optionally, as shown in FIG. 7, the acquiring module 63 further includes: a detecting unit 631, configured to detect, when the database-level synchronization link between the first database and the second database is disconnected, whether the first database is writable; and an acquiring unit 632, configured to acquire the switching sequence number from the second database when the detecting unit 631 detects that the first database is writable.

Optionally, as shown in FIG. 7, the first interacting module 61 specifically includes: a receiving unit 611, configured to receive a modification request sent by a third-party device, where the modification request includes the operation command required for executing the transaction; and a sending unit 612, configured to send the request for creating the transaction to the first database, where the request includes the operation command required for executing the transaction.

Optionally, as shown in FIG. 7, the storing module 62 specifically includes: a querying unit 621, configured to, when the first database executes the transaction, send a request for querying a sequence number to the first database, and receive the sequence number that is corresponding to the transaction and sent by the first database; a submitting unit 622, configured to receive an operation result sent by the first database, where the operation result is an operation result obtained by the first database by executing the operation command, and submit a request of the transaction to the first database to end the transaction; and a storing unit 623, configured to send the operation command required for executing the transaction and the sequence number corresponding to the transaction to the temporary storage queue for storage.

According to the data access apparatus in this embodiment of the present invention, when data synchronization is performed between two databases, a database can still receive access of a third-party device and processing performed by the third-party device is not interrupted. This improves performance of data synchronization in actual application.

FIG. 8 is a schematic diagram of a system for data synchronization according to an embodiment of the present invention, including:
a first database 81, configured to, in a process of database-level synchronization between the first database 81 and a second database, receive, from a data access apparatus, a request for creating a transaction, where the request includes an operation command required for executing the transaction, execute the transaction, and assign a sequence number to the transaction;
a data access apparatus 82, configured to, in the process of database-level synchronization between the first database and the second database, send a request for creating a transaction to the first database; when the first database executes the transaction, acquire a sequence number from the first database and send the operation command required for executing the transaction and the sequence number corresponding to the transaction to a temporary storage queue for storage; acquire a switching sequence number from the second database when a database-level synchronization link between the first database and the second database is disconnected, where the switching sequence number is a sequence number corresponding to a last transaction synchronized from the first database; and determine a sequence number that is stored in the temporary storage queue and follows the switching sequence number, and send an operation command required for executing a transaction corresponding to the determined sequence number to the second database, so as to implement application-level data synchronization; and
a second database 83, configured to establish a database-level synchronization link with the first database, perform database-level data synchronization with the first database, and when the database-level synchronization link established with the first database is disconnected, receive, from the data access apparatus, the sent operation command required for executing the transaction corresponding to the determined sequence number, so as to implement application-level data synchronization.

The system for data synchronization further includes: a temporary storage queue 84, configured to store a queue temporarily and configured to store the operation command required for executing the transaction and the sequence number corresponding to the transaction, where the operation command the sequence number are sent by the data access apparatus.

The information interaction between different modules in the apparatus and the system and the execution processes are based on the same idea as the method embodiments of the present invention. Therefore, reference may be made to the method embodiments of the present invention, and no repeated description is provided herein.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disc, an optical disc, a read-only memory (Read-Only Memory, ROM), or a random access memory (Random Access Memory, RAM).

Specific examples are used in this document to describe the principle and embodiments of the present invention. The embodiments are used to help understand the method and idea of the present invention. It should be appreciated that the foregoing is only preferred embodiments of the invention and is not for use in limiting the invention.

## Claims

1. A method for data synchronization, comprising:
in a process of database-level synchronization through a database-level synchronization link between a first database and a second database, sending (101), by a data access apparatus, to the first database, a request for creating a transaction, wherein the request comprises an operation command required for executing the transaction;
establishing an application-level synchronization link between the data access apparatus, the temporary storage queue, the first database, and the second database;
when the first database executes the transaction according to the operation command, through the application-level synchronization link, acquiring (102), by the data access apparatus, a sequence number from the first database, and sending the operation command required for executing the transaction and the sequence number corresponding to the transaction to a temporary storage queue for storage, wherein the sequence number is assigned by the first database to the transaction;
acquiring (103), by the data access apparatus, a switching sequence number from the second database when detecting that the second database is writable after a database-level synchronization link between the first database and the second database is disconnected, wherein the switching sequence number is a sequence number corresponding to a last transaction synchronized from the first database; and
determining (104), by the data access apparatus, a sequence number that is stored in the temporary storage queue and follows the switching sequence number, and sending an operation command required for executing a transaction corresponding to the determined sequence number to the second database, so as to implement application-level data synchronization.

2. The method according to claim 1, wherein the implementing application-level data synchronization specially comprises:
receiving, by the second database, the operation command required for executing the transaction corresponding to the sequence number following the switching sequence number, and executing, according to a sequence of the sequence number, the operation command required for executing the transaction corresponding to the sequence number following the switching sequence number one by one.

3. The method according to claims 1 to 2, wherein the sending, by the data access apparatus, to the first database, the request for creating the transaction, wherein the request comprises the operation command required for executing the transaction, comprises:
receiving, by the data access apparatus, a modification request sent by a third-party device, wherein the modification request comprises the operation command required for executing the transaction; and
sending, by the data access apparatus, the request for creating the transaction to the first database, wherein the request comprises the operation command required for executing the transaction.

4. The method according to claim 3, wherein the acquiring, by the data access apparatus, the sequence number from the first database when the first database executes the transaction specifically comprises:
when the first database executes the transaction, sending, by the data access apparatus, a request for querying a sequence number to the first database; and
receiving, by the data access apparatus, the sequence number that is corresponding to the transaction and sent by the first database.

5. The method according to claim 4, wherein the sending, by the data access apparatus, the operation command required for executing the transaction and the sequence number corresponding to the transaction to the temporary storage queue for storage specifically comprises:
receiving, by the data access apparatus, an operation result sent by the first database, wherein the operation result is an operation result obtained by the first database by executing the operation command;
submitting a request of the transaction to the first database to end the transaction; and
sending the operation command required for executing the transaction and the sequence number corresponding to the transaction to the temporary storage queue for storage.

6. A data access apparatus, comprising:
a first interacting module (61), configured to, in a process of database-level synchronization between a first database and a second database, send a request for creating a transaction to the first database, wherein the request comprises an operation command required for executing the transaction;
a storing module (62), configured to, through an application-level synchronization link, acquire a sequence number from the first database when the first database executes the transaction according to the operational command, and send the operation command required for executing the transaction and the sequence number corresponding to the transaction to a temporary storage queue for storage, wherein the sequence number is assigned by the first database to the transaction and the application-level synchronization link is established between the data access apparatus, the temporary storage queue, the first database, and the second database;
an acquiring module (63), configured to acquire a switching sequence number from the second database when a database-level synchronization link between the first database and the second database is disconnected, wherein the switching sequence number is a sequence number corresponding to a last transaction synchronized from the first database;
wherein the acquiring module specifically comprises: a detecting unit, configured to, when the database-level synchronization link between the first database and the second database is disconnected, detect whether the first database is writable; and an acquiring unit, configured to acquire the switching sequence number from the second database when the detecting unit detects that the first database is writable; and
a second interacting module (64), configured to determine a sequence number that is stored in the temporary storage queue and follows the switching sequence number, and send the operation command required for executing the transaction corresponding to the determined sequence number to the second database, so as to implement application-level data synchronization.

7. The data access apparatus according to claim 6, wherein the first interacting module (61) specifically comprises:
a receiving unit (611), configured to receive a modification request sent by a third-party device, wherein the modification request comprises the operation command required for executing a transaction; and
a sending unit (612), configured to send the request for creating the transaction to the first database, wherein the request comprises the operation command required for executing the transaction.

8. The data access apparatus according to claim 6, wherein the storing module (62) specifically comprises: a querying unit (621), configured to, when the first database executes the transaction, send a request for querying a sequence number to the first database, and receive a sequence number that is corresponding to the transaction and sent by the first database;
a submitting unit (622), configured to receive an operation result that is sent by the first database, wherein the operation result is an operation result obtained by the first database by executing the operation command, and submit a request of the transaction to the first database to end the transaction; and
a storing unit (623), configured to send the operation command required for executing the transaction and the sequence number corresponding to the transaction to the temporary storage queue for storage.

9. A system for data synchronization, comprising:
a first database (81), configured to, in a process of database-level synchronization between the first database (81) and a second database (83), receive a request for creating a transaction from a data access apparatus (82), wherein the request comprises an operation command required for executing the transaction, execute the transaction according to the operation command, and assign a sequence number to the transaction;
the data access apparatus (82), configured to, in the process of database-level synchronization between the first database (81) and the second database (83), send the request for creating the transaction to the first database (81); when the first database (81) executes the transaction, through an application-level synchronization link,_acquire the sequence number from the first database (81), and send the operation command required for executing the transaction and the sequence number corresponding to the transaction to a temporary storage queue (84) for storage; wherein the sequence number is assigned by the first database to the transaction and the application-level synchronization link is established between the data access apparatus, the temporary storage queue, the first database, and the second database; acquire a switching sequence number from the second database (83) when detecting that the first database is writable after a database-level synchronization link between the first database (81) and the second database (83) is disconnected, wherein the switching sequence number is a sequence number corresponding to a last transaction synchronized from the first database (81); determine a sequence number that is stored in the temporary storage queue (84) and follows the switching sequence number, and send the operation command required for executing the transaction corresponding to the determined sequence number to the second database (83), so as to implement application-level data synchronization; and
the second database (83), configured to establish the database-level synchronization link with the first database (81), perform database-level data synchronization with the first database (81), and when the database-level synchronization link established with the first database (81) is disconnected, receive the operation command required for executing the transaction corresponding to the determined sequence number from the data access apparatus (82), so as to implement the application-level data synchronization.

10. The system according to claim 9, wherein the system further comprises: the temporary storage queue (84), configured to store the operation command required for executing the transaction and the sequence number corresponding to the transaction, which are sent by the data access apparatus (82).

## Patentansprüche

1. Verfahren zur Datensynchronisation, aufweisend:
in einem Prozess einer Synchronisation auf Datenbankebene durch eine Synchronisationsverbindung auf Datenbankebene zwischen einer ersten Datenbank und einer zweiten Datenbank, Senden (101), durch eine Datenzugriffsvorrichtung, an die erste Datenbank, einer Anfrage zum Erzeugen einer Transaktion, wobei die Anfrage einen Betriebsbefehl aufweist, der zum Ausführen der Transaktion erforderlich ist;
Herstellen einer Synchronisationsverbindung auf Anwendungsebene zwischen der Datenzugriffsvorrichtung, der temporären Speicherwarteschlange, der ersten Datenbank und der zweiten Datenbank;
wenn die erste Datenbank die Transaktion gemäß dem Betriebsbefehl ausführt, Erlangen (102), durch die Synchronisationsverbindung auf Anwendungsebene, durch die Datenzugriffsvorrichtung, einer Sequenznummer von der ersten Datenbank, und Senden des Betriebsbefehls, der für die Ausführung der Transaktion erforderlich ist, und der Sequenznummer, die der Transaktion entspricht, zum Speichern an eine temporäre Speicherwarteschlange, wobei die Sequenznummer von der ersten Datenbank der Transaktion zugewiesen wird;
Erlangen (103), durch die Datenzugriffsvorrichtung, einer Schaltsequenznummer von der zweiten Datenbank, wenn erkannt wird, dass die zweite Datenbank beschreibbar ist, nachdem eine Synchronisationsverbindung auf Datenbankebene zwischen der ersten Datenbank und der zweiten Datenbank unterbrochen wurde, wobei die Schaltsequenznummer eine Sequenznummer ist, die einer letzten Transaktion entspricht, die von der ersten Datenbank synchronisiert ist; und
Bestimmen (104), durch die Datenzugriffsvorrichtung, einer Sequenznummer, die in der temporären Speicherwarteschlange gespeichert ist und die der Schaltsequenznummer folgt, und Senden eines Betriebsbefehls, der zum Ausführen einer Transaktion, die der bestimmten Sequenznummer entspricht, erforderlich ist, an die zweite Datenbank, um die Datensynchronisation auf Anwendungsebene zu implementieren.

2. Verfahren nach Anspruch 1, wobei das Implementieren der Datensynchronisation auf Anwendungsebene insbesondere aufweist:
Empfangen, durch die zweite Datenbank, des Betriebsbefehls, der zum Ausführen der Transaktion, die der Sequenznummer entspricht, die der Schaltsequenznummer folgt, erforderlich ist, und Ausführen, des Betriebsbefehls, der zum Ausführen der Transaktion, die der Sequenznummer entspricht, die der Schaltsequenznummer folgt, erforderlich ist, gemäß einer Sequenz der Sequenznummer einer nach dem anderen.

3. Verfahren nach den Ansprüchen 1 bis 2, wobei das Senden, durch die Datenzugriffsvorrichtung, an die erste Datenbank, der Anfrage zum Erzeugen der Transaktion, wobei die Anfrage einen Betriebsbefehl aufweist, der zum Ausführen der Transaktion erforderlich ist, aufweist: Empfangen, durch die Datenzugriffsvorrichtung eine Änderungsanfrage, die von einer Drittanbietervorrichtung gesendet wird, wobei die Änderungsanfrage den Betriebsbefehl aufweist, der zum Ausführen der Transaktion erforderlich ist; und Senden, durch die Datenzugriffsvorrichtung, der Anfrage zum Erzeugen der Transaktion an die erste Datenbank, wobei die Anfrage den Betriebsbefehl aufweist, der zum Ausführen der Transaktion erforderlich ist.

4. Verfahren nach Anspruch 3, wobei das Erlangen, durch die Datenzugriffsvorrichtung, der Sequenznummer von der ersten Datenbank, wenn die erste Datenbank die Transaktion ausführt, insbesondere aufweist:
wenn die erste Datenbank die Transaktion ausführt, Senden, durch die Datenzugriffsvorrichtung, einer Anfrage zum Abfragen einer Sequenznummer an die erste Datenbank; und
Empfangen, durch die Datenzugriffsvorrichtung, der Sequenznummer, die der Transaktion entspricht und von der ersten Datenbank gesendet wurde.

5. Verfahren nach Anspruch 4, wobei das Senden, durch die Datenzugriffsvorrichtung, des Betriebsbefehls, der zum Ausführen der Transaktion erforderlich ist, und der Sequenznummer, die der Transaktion entspricht, zum Speichern an die temporäre Speicherwarteschlange, insbesondere aufweist:
Empfangen, durch die Datenzugriffsvorrichtung, eines von der ersten Datenbank gesendeten Operationsergebnisses, wobei das Operationsergebnis ein Operationsergebnis ist, das durch die erste Datenbank durch Ausführen des Betriebsbefehls erhalten wird;
Übermitteln einer Anfrage der Transaktion an die erste Datenbank, um die Transaktion zu beenden; und Senden des Betriebsbefehls, der zum Ausführen der Transaktion erforderlich ist, und der Sequenznummer, die der Transaktion entspricht, zum Speichern an die temporäre Speicherwarteschlange.

6. Datenzugriffsvorrichtung, aufweisend:
ein erstes Interaktionsmodul (61), das konfiguriert ist, in einem Prozess einer Synchronisation auf Datenbankebene zwischen einer ersten Datenbank und einer zweiten Datenbank, eine Anfrage zum Erzeugen einer Transaktion an die erste Datenbank zu senden, wobei die Anfrage einen Betriebsbefehl aufweist, der zur Ausführung der Transaktion erforderlich ist;
ein Speichermodul (62), das konfiguriert ist, durch eine Synchronisationsverbindung auf Anwendungsebene eine Sequenznummer von der ersten Datenbank zu erlangen, wenn die erste Datenbank die Transaktion gemäß dem Betriebsbefehl ausführt, und den Betriebsbefehl, der zum Ausführen der Transaktion erforderlich ist, und die Sequenznummer, die der Transaktion entspricht, zum Speichern an eine temporäre Speicherwarteschlange zu senden, wobei die Sequenznummer durch die erste Datenbank der Transaktion zugewiesen wird und die Synchronisationsverbindung auf Anwendungsebene zwischen der Datenzugriffsvorrichtung, der temporären Speicherwarteschlange, der ersten Datenbank und der zweiten Datenbank hergestellt wird;
ein Erlangungsmodul (63), das konfiguriert ist, eine Schaltsequenznummer von der zweiten Datenbank zu erlangen, wenn eine Synchronisationsverbindung auf Datenbankebene zwischen der ersten Datenbank und der zweiten Datenbank unterbrochen ist, wobei die Schaltsequenznummer eine Sequenznummer ist, die einer letzten Transaktion entspricht, die von der ersten Datenbank synchronisiert ist;
wobei das Erlangungsmodul insbesondere aufweist: eine Erkennungseinheit, die konfiguriert ist, wenn die Synchronisationsverbindung auf Datenbankebene zwischen der ersten Datenbank und der zweiten Datenbank unterbrochen ist, zu erkennen, ob die erste Datenbank beschreibbar ist; und eine Erlangungseinheit, die konfiguriert ist, die Schaltsequenznummer von der zweiten Datenbank zu erlangen, wenn die Erkennungseinheit erkennt, dass die erste Datenbank beschreibbar ist; und
ein zweites Interaktionsmodul (64), das konfiguriert ist, eine Sequenznummer zu bestimmen, die in der temporären Speicherwarteschlange gespeichert ist und der Schaltsequenznummer folgt, und den Betriebsbefehl, der zum Ausführen der Transaktion, die der bestimmten Sequenznummer entspricht, erforderlich ist, an die zweite Datenbank zu senden, um die Datensynchronisation auf Anwendungsebene zu implementieren.

7. Datenzugriffsvorrichtung nach Anspruch 6, wobei das erste Interaktionsmodul (61) insbesondere aufweist:
eine Empfangseinheit (611), die konfiguriert ist, eine Änderungsanfrage, die von einer Drittanbietervorrichtung gesendet wird, zu empfangen, wobei die Änderungsanfrage den Betriebsbefehl aufweist, der zum Ausführen einer Transaktion erforderlich ist; und
eine Sendeeinheit (612), die konfiguriert ist, die Anfrage zum Erzeugen der Transaktion an die erste Datenbank zu senden, wobei die Anfrage den Betriebsbefehl aufweist, der zum Ausführen der Transaktion erforderlich ist.

8. Datenzugriffsvorrichtung nach Anspruch 6, wobei das Speichermodul (62) insbesondere aufweist: eine Anfrageeinheit (621), die konfiguriert ist, wenn die erste Datenbank die Transaktion ausführt, eine Anfrage zum Anfragen einer Sequenznummer an die erste Datenbank zu senden, und eine Sequenznummer zu empfangen, die der Transaktion entspricht und von der ersten Datenbank gesendet wurde;
eine Übermittlungseinheit (622), die konfiguriert ist, ein Operationsergebnis zu empfangen, das von der ersten Datenbank gesendet wird, wobei das Operationsergebnis ein Operationsergebnis ist, das von der ersten Datenbank durch Ausführen des Betriebsbefehls erhalten wird, und eine Anfrage der Transaktion an die erste Datenbank zu übermitteln, um die Transaktion zu beenden; und
eine Speichereinheit (623), die konfiguriert ist, den Betriebsbefehl, der zum Ausführen der Transaktion erforderlich ist, und die Sequenznummer, die der Transaktion entspricht, zum Speichern an die temporäre Speicherwarteschlange zu senden.

9. System zur Datensynchronisation, aufweisend:
eine erste Datenbank (81), die konfiguriert ist, in einem Prozess einer Synchronisation auf Datenbankebene zwischen der ersten Datenbank (81) und einer zweiten Datenbank (83) eine Anfrage zum Erzeugen einer Transaktion von einer Datenzugriffsvorrichtung (82) zu empfangen, wobei die Anfrage einen Betriebsbefehl aufweist, der zum Ausführen der Transaktion erforderlich ist, die Transaktion gemäß dem Betriebsbefehl auszuführen, und der Transaktion eine Sequenznummer zuzuweisen;
die Datenzugriffsvorrichtung (82), die konfiguriert ist, in dem Prozess der Synchronisation auf Datenbankebene zwischen der ersten Datenbank (81) und der zweiten Datenbank (83) die Anfrage zum Erzeugen der Transaktion an die erste Datenbank (81) zu senden; wenn die erste Datenbank (81) die Transaktion ausführt, durch eine Synchronisation auf der Anwendungsebene die Sequenznummer von der ersten Datenbank (81) zu erlangen, und den Betriebsbefehl, der zum Ausführen der Transaktion erforderlich ist, und die Sequenznummer, die der Transaktion entspricht, zum Speichern an eine temporäre Speicherwarteschlange (84) zu senden; wobei die Sequenznummer von der ersten Datenbank der Transaktion zugewiesen wird und die Synchronisationsverbindung auf Anwendungsebene zwischen der Datenzugriffsvorrichtung, der temporären Speicherwarteschlange, der ersten Datenbank und der zweiten Datenbank hergestellt wird; eine Schaltsequenznummer von der zweiten Datenbank (83) zu erlangen, wenn erkannt wird, dass die erste Datenbank beschreibbar ist, nachdem eine Synchronisationsverbindung auf Datenbankebenen zwischen der ersten Datenbank (81) und der zweiten Datenbank (83) unterbrochen wurde, wobei die Schaltsequenznummer eine Sequenznummer ist, die einer letzten Transaktion entspricht, die von der ersten Datenbank (81) synchronisiert ist; eine Sequenznummer zu bestimmen, die in der temporären Speicherwarteschlange (84) gespeichert ist und die der Schaltsequenznummer folgt, und den Betriebsbefehl, der zum Ausführen der Transaktion, die der bestimmten Sequenznummer entspricht, erforderlich ist, an die zweite Datenbank (83) zu senden, um die Datensynchronisation auf Anwendungsebene zu implementieren; und
die zweite Datenbank (83), die konfiguriert ist, die Synchronisationsverbindung auf Datenbankebene mit der ersten Datenbank (81) herzustellen, die Datensynchronisation auf Datenbankebene mit der ersten Datenbank (81) durchzuführen, und wenn die Synchronisationsverbindung auf Datenbankebene, die mit der ersten Datenbank (81) hergestellt wurde, unterbrochen wird, den Betriebsbefehl, der zum Ausführen der Transaktion, der der bestimmten Sequenznummer entspricht, erforderlich ist, von der Datenzugriffsvorrichtung (82) zu empfangen, um die Datensynchronisation auf Anwendungsebene zu implementieren.

10. System nach Anspruch 9, wobei das System ferner aufweist: die temporäre Speicherwarteschlange (84), die konfiguriert ist, den Betriebsbefehl, der zum Speichern der Transaktion erforderlich ist, und die Sequenznummer, die der Transaktion entspricht, die durch die Datenzugriffsvorrichtung (82) gesendet wurden, zu speichern.

## Revendications

1. Procédé de synchronisation de données, comprenant :
dans un procédé de synchronisation de niveau de base de données par l'intermédiaire d'une liaison de synchronisation de niveau de base de données entre une première base de données et une seconde base de données, l'envoi (101), par un appareil d'accès à des données, à la première base de données, d'une requête de création de transaction, la requête comprenant une commande d'opération nécessaire pour exécuter la transaction ;
l'établissement d'une liaison de synchronisation de niveau d'application entre l'appareil d'accès à des données, la file d'attente de stockage temporaire, la première base de données et la seconde base de données ;
lorsque la première base de données exécute la transaction selon la commande d'opération, par l'intermédiaire de la liaison de synchronisation de niveau d'application, l'acquisition (102), par l'appareil d'accès à des données, d'un numéro de séquence à partir de la première base de données, et l'envoi de la commande d'opération nécessaire pour exécuter la transaction et le numéro de séquence correspondant à la transaction à une file d'attente de stockage temporaire pour le stockage, le numéro de séquence étant attribué par la première base de données à la transaction :
l'acquisition (103), par l'appareil d'accès à des données, d'un numéro de séquence de commutation à partir de la seconde base de données lors de la détection du fait que le seconde base de données est inscriptible après qu'une liaison de synchronisation de niveau de base de données entre la première base de données et la seconde base de données est déconnectée, le numéro de séquence de commutation étant un numéro de séquence correspondant à une dernière transaction synchronisée à partir de la première base de données ; et
la détermination (104), par l'appareil d'accès à des données, d'un numéro de séquence qui est stocké dans la file d'attente de stockage temporaire et suit le numéro de séquence de commutation, et l'envoi d'une commande d'opération nécessaire pour exécuter une transaction correspondant au numéro de séquence déterminé à la seconde base de données, de façon à mettre en oeuvre une synchronisation de données de niveau d'application.

2. Procédé selon la revendication 1, la mise en oeuvre de la synchronisation de données de niveau d'application comprenant spécialement :
la réception, par la seconde base de données, de la commande d'opération nécessaire pour exécuter la transaction correspondant au numéro de séquence suivant le numéro de séquence de commutation, et l'exécution, selon une séquence du numéro de séquence, de la commande d'opération nécessaire pour exécuter la transaction correspondant au numéro de séquence suivant le numéro de séquence de commutation un par un.

3. Procédé selon les revendications 1 à 2, l'envoi, par l'appareil d'accès à des données, à la première base de données, de la requête de création de la transaction, la requête comprenant la commande d'opération nécessaire pour exécuter la transaction, comprenant : la réception, par l'appareil d'accès à des données, d'une requête de modification envoyée par un dispositif tiers, la requête de modification comprenant la commande d'opération nécessaire pour exécuter la transaction ; et
l'envoi, par l'appareil d'accès à des données, de la requête de création de la transaction à la première base de données, la requête comprenant la commande d'opération nécessaire pour exécuter la transaction.

4. Procédé selon la revendication 3, l'acquisition, par l'appareil d'accès à des données, du numéro de séquence de la première base de données lorsque la première base de données exécute la transaction comprenant spécifiquement :
lorsque la première base de données exécute la transaction, l'envoi, par l'appareil d'accès à des données, d'une requête d'interrogation d'un numéro de séquence dans la première base de données ; et
la réception, par l'appareil d'accès à des données, du numéro de séquence qui correspond à la transaction et envoyé par la première base de données.

5. Procédé selon la revendication 4, l'envoi, par l'appareil d'accès à des données, de la commande d'opération nécessaire pour exécuter la transaction et du numéro de séquence correspondant à la transaction à la file d'attente de stockage temporaire pour le stockage comprenant spécifiquement :
la réception, par l'appareil d'accès à des données, d'un résultat d'opération envoyé par la première base de données, le résultat de l'opération étant un résultat d'opération obtenu par la première base de données par exécution de la commande d'opération ;
la soumission d'une requête de la transaction à la première base de données pour terminer la transaction ; et l'envoi de la commande d'opération nécessaire pour exécuter la transaction et du numéro de séquence correspondant à la transaction à la file d'attente de stockage temporaire pour le stockage.

6. Appareil de base de données comprenant :
un premier module d'interaction (61), configuré pour, dans un processus de synchronisation de niveau de base de données entre une première base de données et une seconde base de données, envoyer une requête de création de transaction à la première base de données, la requête comprenant une commande d'opération nécessaire pour exécuter la transaction ;
un module de stockage (62), configuré pour, par l'intermédiaire d'une liaison de synchronisation de niveau d'application, acquérir un numéro de séquence à partir de la première base de données lorsque la première base de données exécute la transaction selon la commande opérationnelle, et envoyer la commande d'opération nécessaire pour exécuter la transaction et le numéro de séquence correspondant à la transaction à une file d'attente de stockage temporaire pour le stockage, le numéro de séquence étant attribué par la première base de données à la transaction, et la liaison de synchronisation de niveau d'application étant établie entre l'appareil d'accès à des données, la file d'attente de stockage temporaire, la première base de données et la seconde base de données ;
un module d'acquisition (63), configuré pour acquérir un numéro de séquence de commutation à partir de la seconde base de données lorsqu'une liaison de synchronisation de niveau de base de données entre la première base de données et la seconde base de données est déconnectée, le numéro de séquence de commutation étant un numéro de séquence correspondant à une dernière transaction synchronisée à partir de la première base de données ;
le module d'acquisition comprenant spécifiquement : une unité de détection, configurée pour, lorsque la liaison de synchronisation de niveau de base de données entre la première base de données et la seconde base de données est déconnectée, détecter si la première base de données est inscriptible ; et
une unité d'acquisition, configurée pour acquérir le numéro de séquence de commutation à partir de la seconde base de données lorsque l'unité de détection détecte que la première base de données est inscriptible ; et
un second module d'interaction (64), configuré pour déterminer un numéro de séquence qui est stocké dans la file d'attente de stockage temporaire et suit le numéro de séquence de commutation, et envoyer la commande d'opération nécessaire pour exécuter la transaction correspondant au numéro de séquence déterminé à la seconde base de données, de façon à mettre en oeuvre une synchronisation de données de niveau d'application.

7. Appareil d'accès à des données selon la revendication 6, le premier module d'interaction (61) comprenant spécifiquement :
une unité de réception (611), configurée pour recevoir une requête de modification envoyée par un dispositif tiers, la requête de modification comprenant la commande d'opération nécessaire pour exécuter une transaction ; et
une unité d'envoi (612), configurée pour envoyer la requête de création de la transaction à la première base de données, la requête comprenant la commande d'opération nécessaire pour exécuter la transaction.

8. Appareil d'accès à des données selon la revendication 6, le module de stockage (62) comprenant spécifiquement :
une unité d'interrogation (621), configurée pour, lorsque la première base de données exécute la transaction, envoyer une requête d'interrogation d'un numéro de séquence à la première base de données, et recevoir un numéro de séquence qui correspond à la transaction et envoyé par la première base de données ;
une unité de soumission (622), configurée pour recevoir un résultat d'opération qui est envoyé par la première base de données, le résultat de l'opération étant un résultat d'opération obtenu par la première base de données par exécution de la commande d'opération, et soumettre une requête de la transaction à la première base de données pour terminer la transaction : et
une unité de stockage (623), configurée pour envoyer la commande d'opération nécessaire pour exécuter la transaction et le numéro de séquence correspondant à la transaction à la file d'attente de stockage temporaire pour le stockage.

9. Système de synchronisation de données comprenant :
une première base de données (81), configurée pour, dans un processus de synchronisation de niveau de base de données entre la première base de données (81) et une seconde base de données (83), recevoir une requête de création de transaction à partir d'un appareil d'accès à des données (82), la requête comprenant une commande d'opération nécessaire pour exécuter la transaction, exécuter la transaction selon la commande d'opération, et attribuer un numéro de séquence à la transaction :
l'appareil d'accès à des données (82), configuré pour, dans le processus de synchronisation de niveau de base de données entre la première base de données (81) et la seconde base de données (83), envoyer la requête de création de la transaction à la première base de données (81) ;
lorsque la première base de données (81) exécute la transaction, par l'intermédiaire d'une liaison de synchronisation de niveau d'application, acquérir le numéro de séquence à partir de la première base de données (81), et envoyer la commande d'opération nécessaire pour exécuter la transaction et le numéro de séquence correspondant à la transaction à une file d'attente de stockage temporaire (84) pour le stockage ;
le numéro de séquence étant attribué par la première base de données à la transaction et la liaison de synchronisation de niveau d'application étant établie entre l'appareil d'accès à des données, la file d'attente de stockage temporaire, la première base de données et la seconde base de données ;
acquérir un numéro de séquence de commutation à partir de la seconde base de données (83) lors de la détection du fait que la première base de données est inscriptible après qu'une liaison de synchronisation de niveau de base de données entre la première base de données (81) et la seconde base de données (83) est déconnectée, le numéro de séquence de commutation étant un numéro de séquence correspondant à une dernière transaction synchronisée à partir de la première base de données (81) ;
déterminer un numéro de séquence qui est stocké dans la file d'attente de stockage temporaire (84) et suit le numéro de séquence de commutation, et envoyer la commande d'opération nécessaire pour exécuter la transaction correspondant au numéro de séquence déterminé à la seconde base de données (83), de façon à mettre en oeuvre une synchronisation de données de niveau d'application ; et la seconde base de données (83), configurée pour établir la liaison de synchronisation de niveau de base de données avec la première base de données (81), effectuer une synchronisation de données de niveau de base de données avec la première base de données (81), et lorsque la liaison de synchronisation de niveau de base de données établie avec la première base de données (81) est déconnecté, recevoir la commande d'opération nécessaire pour exécuter la transaction correspondant au numéro de séquence déterminé à partir de l'appareil d'accès à des données (82), de façon à mettre en oeuvre la synchronisation de données de niveau d'application.

10. Système selon la revendication 9, le système comprenant en outre : la file d'attente de stockage temporaire (84), configurée pour stocker la commande d'opération nécessaire pour exécuter la transaction et le numéro de séquence correspondant à la transaction, qui sont envoyée par l'appareil d'accès à des données (82).
